# EUROPEAN PATENT APPLICATION

(11) **EP 4 782 736 A1**
(43) Date of publication of application: **29.07.2026**
(21) Application number: 25225042.8
(22) Date of filing: 18.12.2025
(51) Int. Cl.: F16L 1/12, E21B 17/01, H02G 1/10, H02G 3/04

(54) **CABLE PROTECTION SYSTEM AND/OR METHOD OF USE THEREOF**

(30) Priority: 28.01.2025 GB 202501196
(71) Applicant: Sirona Subsea Ltd, Durham DL1 4QZ (GB)
(72) Inventor: BREND, Michael, Darlington, DL1 4QZ (GB); JEFFREY, Sheldon, Darlington, DL1 4QZ (GB)
(74) Representative: Tomkinson, Alexandra

(57) **Abstract**

A cable protection system is provided. The cable protection system comprises one or more annular elements for location around at least part of an item in use. Each annular element comprises a first shell member and at least a second shell member. The first and/or at least second shell member having a cavity defined therein, therethrough or therebetween for the location of said item part in use. The first and at least second shell members are arranged to move between an open position, wherein said item part can be located in or removed from the cavity in use, and a closed position, wherein access to the cavity is restricted or prevented. Connection means are provided for connecting the first and at least second shell members together in use. The first and at least second shell members are non-overcentre or non-overlapping shell members, and the connection means are arranged to be connected to the first and/or at least second shell members in a circumferential direction in use.

## Description

This invention relates to a cable protection system and/or a method of use or manufacture thereof. In particular, the present invention relates to a cable protection system in the form of or including bend restriction apparatus and/or a method of use or manufacture thereof.

Although the following description refers almost exclusively to a cable protection system in the form of bend restriction apparatus for protecting subsea cables and/or umbilicals from bending stresses that can occur during normal offshore installation and operation, it will be appreciated that the cable protection system of the present invention can be used to protect any sort of cable, cable-like-objects or elongate objects for any purpose, such as for example cable crossings, articulated pull-in heads and/or the like.

Bend restriction apparatus is used to protect subsea cables or umbilicals from bending stresses that can occur during normal offshore installation and operation. The apparatus is designed to offset the action of applied loads which could kink or buckle the internal conduits of an umbilical, cable or flexible riser pipe in use. There are a number different designs of bend restriction apparatus currently available in the marketplace. One of these designs provides two half shells that are placed around a cable and the half shells are bolted together, typically using six bolts. A problem with this design is that it can be challenging to install given that both half shells must be placed together around in the cable in the field before six separate bolts, nuts and washers are fitted to the same. In addition, the bolts are manufactured from an exotic alloy, such as super-duplex, with a locking style nut to prevent slackening of the bolt in service. The increased friction caused by the exotic alloy presents a much higher chance of galling when the threads are tightened, thereby potentially further increasing installation times and challenges.

In an attempt to overcome the abovementioned problems, it is known to provide a boltless design comprising two over-centre cast half elements containing castellations at the joints. When the half elements are moved together in use to enclose a cable therebetween, the castellations on the opposing shell halves overlap and an elongate pin is located through apertures defined in the castellations to retain the half elements in a closed position. Although this design significantly reduces the installation time and reduces the risk of thread galling compared to the six bolt design, the mould tooling, post cast dressing and machining required results in a very labour intensive product to manufacture.

A further design is disclosed in GB2540780 which provides two over-centre half shells hinged together using a radially displaced single axial pin on one side and, on an opposing side, castellations are provided that are moved into overlapping engagement and maintained in a closed position using a further axial pin.

A yet further design is disclosed in EP3500718 which provides two over-centre half shells with a fixing assembly on an outer circumferential edge of one of the shells for connecting the two shells together in use. The fixing assembly is integrally connected to said one shell and comprises a bolt that is rotatably connected on one shell for overlapping engagement with the adjacent shell.

A problem with all the over-centre half shell designs is that, due to a part of the half shell protruding beyond the centre line or radial face of the half shell (i.e. it is arranged such the protruding part of one shell overlaps with a recessed part of an adjoining shell in use), it is difficult to cast or mould these shells in a conventional manner. This results in relatively costly casting or mouldings which are more complex and time consuming to manufacture.

It is therefore an aim of the present invention to provide a cable protection system that provides an alternative design and overcomes the abovementioned problems.

It is a further aim of the present invention to provide a method of using and/or manufacturing a cable protection system.

It is a yet further aim of the present invention to provide bend restriction apparatus.

It is a yet further aim of the present invention to provide a method of using and/or manufacturing bend restriction apparatus.

According to an aspect of the present invention there is provided a cable protection system; said cable protection system comprising one or more annular elements for location around at least part of an item in use, each annular element comprising a first shell member and at least a second shell member; the first and/or at least second shell member having a cavity defined therein, therethrough or therebetween for the location of said item part in use; said first and at least second shell members arranged to move between an open position, wherein said item part can be located in or removed from the cavity in use, and a closed position, wherein access to the cavity is restricted or prevented; and wherein connection means are provided for connecting the first and at least second shell members together in use; characterised in that the first and at least second shell members are non-over-centre or non-overlapping shell members, and the connection means are arranged to connect the first and/or at least second shell members in a circumferential direction in use.

The combination of the non-over-centre or non-overlapping shell members and the circumferentially connectable connection means significantly simplifies and reduces the time, complexity and cost of the manufacturing and installation process, it allows in some of the embodiments for at least partial pre-installation assembly of the shell members, it improves the ease and speed of installation of the elements in the field in use, it removes the need for post-cast drilling, it minimises the need for post-cast dressing, and it provides improved strong and rigidity to the resulting annularelements. The present invention is therefore significantly advantageous over prior art designs in the marketplace.

In one embodiment the terms "non-over-centre" of "non-overlapping" refers to the shell member(s) not having protruding parts that are integral with the shell members (i.e. that are cast or moulded with the shell members) and that protrude outwardly from a radial face of the shell member, are arranged to overlap with the adjoining shell member in use and/or protrude beyond a centre line of the resulting annular element. For example, a non-over centre or non-overlapping shell member is one that does not have castellations as is the case with the prior art.

In one embodiment the terms "non-overlapping" or "non-over centre" refers to an arrangement that when one or more radial surfaces of the shell members are brought into abutment, the shell members do not have any integral part protruding beyond the abutting surfaces.

The use of non-over-centre or non-overlapping shell members typically reduces the amount of material required to mould or cast the shell members, thereby making the cable protection system significantly more cost effective than prior art arrangements. It also typically allows the use of a 'bathtub' style moulding, which improves the quality of the finished shell members and reduces flash. It allows the fill material for the shell member moulds to be more easily poured and cast with pre-defined connection pin holes in place. This minimises flashing and removes post mould pour machining requirements. In some examples, it also allows the same shell member construction or template to be used on either or both sides of the element, thereby greatly simplifying manufacture of the elements in use.

Preferably removal of the item part from the cavity with the shell members are in the closed position is prevented or substantially prevented in use.

Preferably the connection means and the first and second shell members are moulded or cast separately and independently of each other. This helps to allow precision control on pour height of the fill material into the mould or cast in use.

Preferably the first and second shell members are each cast or moulded as a single integral piece.

In one embodiment each annular element consists of the first shell member and the second shell member.

Preferably the first half shell member and the second shell member are half shell members.

Preferably flat or substantially flat radial surfaces of each shell member or half shell member are brought into abutting engagement with each other to form the closed position of the annular element in use.

Preferably one or more radial surfaces of the first and at least second shell members are brought into abutting engagement with each other to form the closed position of the element in use. In one example, the abutting surfaces are on a centre line or substantially centre line of the element.

In one example, the first and at least second shell members abut with each other along a central axis of the element.

In one embodiment the first and at least second shell members are identical or substantially identical. This increases the ease of manufacturing the shell members in use as only a single shell member design needs to be produced.

In one embodiment three or more shell members are joined together to form the annular element. In this embodiment, connection means are provided between two adjacent shell members to join the shell members together in use.

In one embodiment the first and at least second shell members are different or non-identical. For example, a connection recess defined on the shell members used for the location of the connection means in use could have a different shape on the first shell member compared to the second shell member.

In one embodiment each of the first and at least second shell members includes a body portion, and a neck portion extending outwardly from the body portion. Preferably, the annular element has a body portion and a neck portion extending outwardly from the body portion.

Preferably the body portion of the annular element has a larger diameter or radius compared to the neck portion.

Preferably the body portion of the first and at least second shell members has a larger diameter or radius compared to the neck portion.

Preferably a first end of the neck portion immediately adjoining the body portion has a smaller external diameter than the second end of the neck portion furthest from the body portion. Preferably this creates an external channel, and further preferably an external circumferential channel, between the body portion and the second end of the neck portion of the shell members and/or element.

Preferably the body portions of the first and at least second shell members are arranged for engagement around the neck portions of an adjacent first and at least second shell members and/or an adjacent element in use. Preferably this allows the shell members and/or adjacent annular elements to be joined together in use.

Preferably a plurality of annular elements can be joined in an end to end manner to form an elongate cable protection system.

Preferably the plurality of annular elements are joined in series together in use to form an elongate cable protection system.

In one embodiment a cavity is defined in each of the first and at least second shell members.

Preferably when the first and at least second shell members are joined together in the closed position in use, the cavity defined in each of the first and at least second shell members are joined together or brought into fluid communication with each other to form an enlarged cavity.

Preferably the cavity is defined axially of the annular element, the first shell member and/or at least second shell member.

Preferably a longitudinal axis of the cavity is arranged parallel or substantially parallel to a longitudinal axis of the first shell member, the second shell member and/or the annular element.

Preferably the cavity is arranged to be coaxial with the annular element.

Preferably the cavity is located through both the body portion and the neck portion of the first and at least second shell members and/or the element.

Preferably the cavity in the body portion of the annular element has a larger diameter than the cavity of the neck portion. This allows the cavity of the body portion to engage around an exterior of the neck portion of an adjacent annular element in use.

Preferably a first end of the body portion of the annular element and/or shell members is shaped so as to locate in the external circumferential channel of the neck portion of an adjacent annular element and/or shell members when engaged in use.

Preferably the connection means are arranged to be in or are moved into overlapping or bridging engagement with the first and at least second shell members when in a closed position to join the shell members together in use.

Preferably the connection means are arranged to overlap or bridge a longitudinal axis of the shell members or the abutting surfaces of the first and at least second shell members when the shell members are in a closed position in use.

Preferably two, or at least two, connection means are provided to engage the first and at least second shell members together in use. Further preferably the connection means are provided a spaced distance apart on the shell members and/or are provided on opposing sides of the first and at least second shell members.

In one embodiment the connection means on one side of the shell members can be the same or substantially the same as the connection means on the opposite side of the shell members. In an alternative embodiment the connection means on one side of the shell members is different to the connection means on the opposing side of the shell members.

Preferably the connection means provide a shake-proof locking joint or joints for the cable protection system, while providing strength and rigidity to the cable protection system.

Preferably the degree or distance of overlap of the connection means with the first shell member is the same or substantially the same as the degree or distance of overlap of the connection means with the at least second shell member when connected in use. This allows for an even or substantially event distribution of force through the connection means in use. However, the degree or distance of overlap of the connection means on the first and second shell members could be different if required.

Preferably the connection means is a separate, independent component to the first shell member and the at least second shell member. The provision of the connection means as a separate, independent component in the manufacture and/or use of the cable protection system allows non-over-centre or non-overlapping shell members to be provided while providing the strength of the integral castellation joints that have been commonly used in the prior art but without the problems associated with over-centre castings and moulds.

Preferably the connection means are detachably attached to the first and/or at least second shell members.

In one embodiment the connection means is symmetrical or substantially symmetrical in form.

In one embodiment the connection means is asymmetrical or substantially asymmetrical in form.

In one embodiment the connection means is a plate or plate-like member.

In one embodiment the connection means is a circumferential member in that it is arranged to be located circumferentially of the shell members and/or annular element in use, and further preferably to bridge or join the shell members in a circumferential direction.

Preferably the connection means engages in a circumferential direction on the first and at least second shell members in that it follows or substantially follows the circumference or external circumference of the shell members, at least in the area of the shell members where the connection means is located in use.

Preferably an outer or external surface of the connection means has a curvature or surface shape that is the same or substantially the same as a curvature or surface shape of the annular element where the connection means is connected in use, at least in the area where the connection means is connected to the annular element in use. For example, the external surface of the connection means forms an arc in the circumference of the annular element.

In one embodiment the outer or external surface of the connection means is arranged to be flush or substantially flush with the surrounding external surface of the annular element, the first shell member and/or at least the second member when it is connected to the shell members and/or annular element in use.

In one embodiment the outer or external surface of the connection means can be recessed or substantially recessed with respect to the surrounding external surface of the annular element, the first shell member and/or at least the second member when it is connected to the shell members and/or annular element in use.

In one embodiment the outer or external surface of the connection means can be protruding outwardly with respect to the surrounding external surface of the annular element, the first shell member and/or at least the second member with which it is connected to in use.

Preferably the connection means is arranged to be connected between the body portions of the first and at least second shell members in use.

Preferably one or more connection recesses are defined in the first and at least second shell members for location of at least part of the connection means in use.

Preferably the connection recesses of the first and at least second shell members are arranged to be aligned or substantially aligned when the shell members are brought together to form the closed position in use. This typically allows for accommodation of the connection means in the aligned connection recesses of the shell members in use.

Preferably connection recesses are provided on opposing sides of the first and at least second shell members.

Preferably a base surface of the connection recess is complementary or substantially complementary in shape and/or dimensions to the inner or lower surface of the connection means which engages with the same when the connection means connects the shell members together in use.

In one example, the inner or lower surface of the connection means has a curvature that is the same or substantially the same as the curvature of the base surface of the connection recess.

Preferably the connection recess is complementary or substantially complementary in shape and/or dimensions to the connection means or part of the connection means which is to be located in the same in use.

In one embodiment the connection means, or at least part of the connection means, is rotatably, hingedly or pivotably mounted to the first and/or at least second shell members inuse.

In one embodiment the connection means, or at least part of the connection means, is fixedly mounted to the first and/or at least second shell members.

In one embodiment the connection means has a first end and a second end, the first end arranged for connection to one of the first and at least second shell members and the second end for arranged for connection to the other of the first and at least second shell member in use.

In one embodiment the connection means is arranged or capable of being pivotably, hingedly or rotatably mounted to the first and/or at least second shell members at either or both of the first and second ends of the connection means in use.

In one embodiment the connection means is arranged to be rotatably, pivotably or hingedly mounted to the first and/or at least second shell members at one of the first or second ends, and fixedly mounted to the first and/or at least second shell members at the other of the first or second ends of the connection means in use.

In one embodiment the connection means is arranged to be fixedly mounted to the first and/or at least second shell members at both the first and second ends of the connection means in use.

Preferably when an end of the connection means is rotatably, pivotably or hingedly mounted or mountable to a shell member, the end is rounded, substantially rounded, curved, convexed and/or the like.

Preferably when an end of the connection is fixedly mounted or mountable to a shell member, at least part of the end is provided at any or any combination of an angle, flat, planar, non-rounded, non-curved, is angular and/or the like.

In one embodiment the connection means includes and/or is associated with one or more connection protrusions or connection pins for allowing connection of the connection means to the first and/or at least second shell members in use.

Preferably a connection pin or connection protrusion(s) is used to connect the connection means to the first and/or at least second shell member in use.

Preferably a connection pin or connection protrusion(s) is provided at each end of the connection means to connect the connection means to the first and/or at least second shell member in use.

Preferably the connection pin or connection protrusion(s) can be used to allow fixed and/or rotatable mounting of the connection means to the shell members in use.

Preferably the connection pin or connection protrusion(s) is axially arranged, is arranged in an axial direction, or a longitudinal axis of the connection pin or connection protrusion(s) is arranged to be parallel or substantially parallel to a longitudinal direction of the shell members when fitted in use.

In one embodiment the connection means is rotatably, hingedly or pivotably mounted to a shell member about an axis of rotation, and further preferably about the axis or longitudinal axis of the connection pin or connection protrusion(s).

Preferably the axis of rotation of the connection means is parallel or substantially parallel to a longitudinal axis of the annular element, the first shell member and/or the at least second shell member.

Preferably the connection pin is formed from or includes a metal, such as for example, stainless steel or Super Duplex stainless steel.

In one embodiment the connection pin or connection protrusion(s) form part of the connection means.

In one embodiment the connection means is any means, device or member to allow connection between first and at least second shell members in use.

In one embodiment an aperture, recess, channel or through-hole is defined at an end or each end of the connection means to allow the connection pin or pins or connection protrusions to pass therein or therethough in use.

Preferably the connection recess has one or more apertures, recesses, channels or through-holes defined therein for the location of at least part of the connection pin or pins or connection protrusions therein or therethrough in use.

Preferably the one or more apertures, recesses, channels or through-holes of the connection recess is/are arranged to be aligned or substantially aligned with the one or more apertures, recesses, channels or through-holes defined at an end of the connection means.

In one embodiment a first end of the body portion of a shell member has an aperture, recess, channel or through-hole defined therethrough to a second end of the body portion of the shell member. This allows for a connection pin or connection protrusion to pass all the way through the body portion and through an end of the connection means located in the connection recess in use.

In one embodiment the connection pin(s) or connection protrusion is threaded at an end or first end thereof and is arranged to screw directly into a complementary screw thread provided on one or more walls defining the aperture, recess, channel or through-hole of the first and/or at least second shell members.

Preferably the connection pin(s) has a tool connection recess or slot at an end or second end thereof for allowing a tool be connected to the same in use to help fit the connection pin(s) in the first and/or at least second shell members in use.

Preferably the tool connection recess is arranged for the connection of an Allen key tool bit in use, such as for example, a hexagonal recess is provided for the location of a hexagonal tool head.

In one embodiment the first and at least second shell members are hingedly movable between the open and closed positions in use.

In one embodiment the first and at least second shell members are moved between the open and closed positions in use by separating the shell members from each other and bringing the shell members together respectively in use.

In one embodiment a cut out portion is defined on an external surface adjacent a joint interface of the first and/or at least second shell members to allow the shell members to be pivotally, hingedly or rotatably movable relative to each other without obstruction in use. In one example the cut out portion defines a narrowing taper towards the abutting surfaces of the shell members, is V-shaped, substantially V-shaped, is U-shaped or substantially U-shaped.

In one embodiment when the first and at least second shell members are rotatably, hingedly or pivotably movable relative to each other, they are arranged in this way during a pre-installation stage. This allows the first and least second shell members to be pre-joined together and transported to the site where they are to be deployed in the field. An operator then simply hingedly moves the hinged shell members between the open and closed positions to locate and/or remove a part of an item from the cavity in use.

Preferably the connection means, the first shell member and/or the at least second shell member is formed from or includes a plastic material, a polymer, such as for example, polyurethane and/or the like.

Preferably the item is any or any combination of a cable, electrical cable, flowline, rise pipe, flexible pipe, conduit, umbilical and/or the like.

In one example, the cable protection system is in the form of bend restrictor apparatus.

In one example, the cable protection system is in the form of cable crossing apparatus.

In one embodiment engagement means can be provided on and/or associated with the connection means, the first and at least second shell members to allow engagement of the same with lifting equipment in use. For example, the engagement means could be in the form of an eyebolt installed in or with the connection means, thereby allowing lifting of the fully assembled annular element mechanically, which can allow the element to be accurately placed into the installation position in use.

Preferably the annular element can be moved between the open and closed positions manually in order to install the annular element in use.

In one embodiment the annular elements and/or shell members are pre-assembled with the connection means.

Preferably the amount of pre-assembly of the annular elements or shell members depends, for example, on the embodiment of the connection means that is to be used with the system, the application of use of the annular elements and/or the like. For example, in the embodiment where the first and second shell members are arranged to be hingedly movable between the open and closed positions in use, three connection pins can be provided to allow one connection means to be fully mounted on one side of the annular element that will form the rotatable hinge and one connection means to be partially connected on the opposite side of the annular element. During installation in the field, a fourth connection pin can be used to complete the connection of the connection means to the two shell members.

In one embodiment, two connection pins can be provided to allow a connection means to be connected to each of the first and second shell members or to allow two connection means to be connected on either side of one of the first or second shell members. During installation in the field, two further connection pins can be used to complete the connection of the connection means to the two shell members.

In one embodiment, the connection pins and connection pins could be fitted in the field without any pre-installation or only a single connection and connection means could be fitted if required.

In one embodiment a plurality of annular elements are pre-assembled together in an end to end manner, such as for example in a one metre stack. Sealing means, such as an O-ring, can be placed over the neck portion of each element preventing the stack from breaking open during transit.

Preferably, once the pre-assembled stack has been transported into the field for assembly, the sealing means is removed from the neck portion.

According to a second aspect of the present invention there is provided a method of manufacturing a cable protection system, said method including the steps of: providing a first shell member and at least a second shell member to form an annular element for location around at least part of an item in use; defining a cavity therein, therethrough or therebetween the first and/or at least second shell members for the location of said item part in use; arranging said first and at least second shell members to move between an open position, wherein said item part can be located in or removed from the cavity in use, and a closed position, wherein access to the cavity is restricted or prevented; and providing connection means for connecting the first and at least second shell members together in use; characterised in that first and at least second shell members are non-over-centre or non-overlapping shell members, and the connection means are arranged to be connectable to the first and/or at least second shell members in a circumferential direction in use.

According to a further aspect of the present invention there is provided a method of using a cable protection system, said method including the steps of: locating a first shell member and at least a second shell member around at least part of an item to form one or more annular elements, locating said item part within a cavity defined in said first and/or said at least second shell members; moving said first and at least second shell members between an open position, wherein said item part can be located in or removed from the cavity in use, and a closed position, wherein access to the cavity is restricted or prevented; and connecting the first and at least second shell members together using connection means; characterised in that the first and at least second shell members are non-over-centre or non-overlapping shell members, and the method includes the step of connecting the connection means to the first and/or at least second shell members in a circumferential direction.

According to a yet further aspect of the present invention there is provided bend restrictor apparatus.

In one example the bend restrictor apparatus is vertebrae bend restrictor apparatus.

According to a yet further aspect of the present invention there is provided a method of manufacturing and/or using bend restrictor apparatus.

In one embodiment the shell members and/or connection means are produced using a mould tool formed from aluminium. The mould tool could include the outer mould for the shell members, a mould core, connection means and/or connection pins.

In one example, the connection means are produced using a mould tool having a water jet cut profile to provide an accurate finish on the exterior surfaces of the same. This ensures a good fit of the connection means in the connection recess in use.

Preferably through-apertures are pre-cast or pre-moulded into the shell members and/or connection means for ease of production and installation.

According to a yet further aspect of the present invention there is provided a first and/or second shell member for use in a cable protection system or bend restrictor apparatus.

Embodiments of the present invention will now be described with reference to the following figures, wherein:
Figures 1a and 1b show a perspective view and a side view of an annular element of a cable protection system according to the present invention respectively;

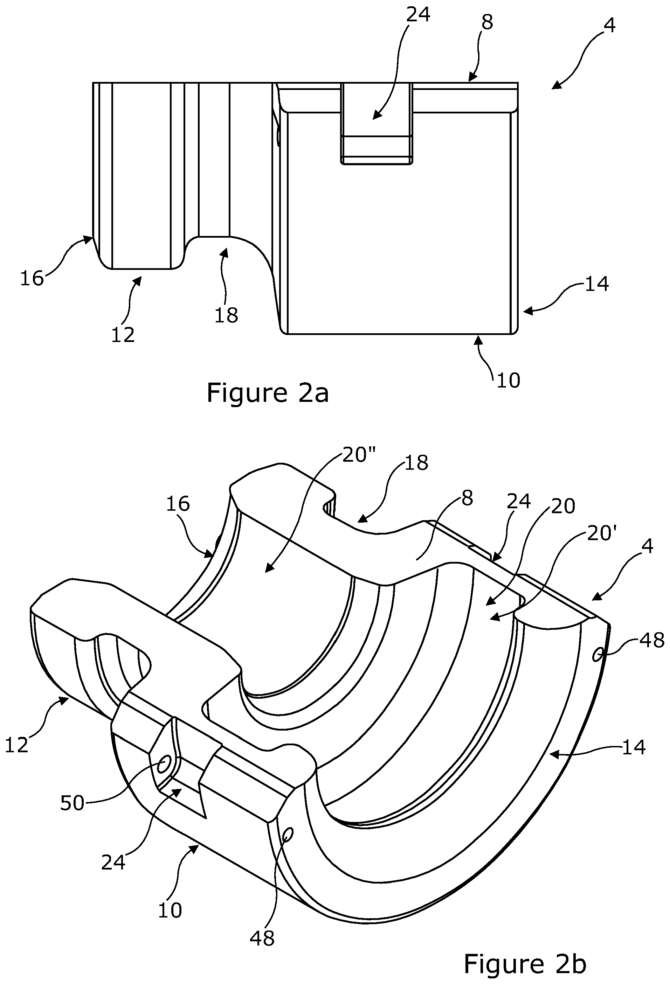

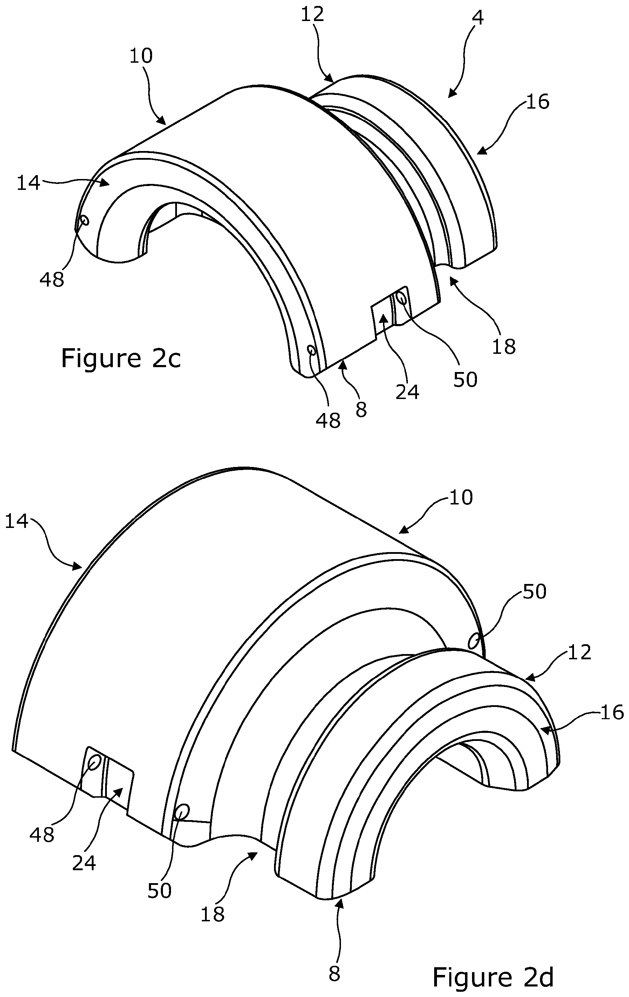

Figures 2a-2d show a side view, a top perspective view, a base perspective view from one end and a base perspective view from a second end of a shell member of the annular element shown in figures 1a-1b respectively;
Figures 3a and 3b show a perspective view of a single annular element in a closed position with part of a cable located therethrough, and a plurality of annular elements joined together in an end to end manner respectively;
Figure 3c shows a side view of the plurality of annular elements in figure 3b;
Figure 3d shows a plurality of annular elements joined together in an end to end manner with two of the annular elements in an open position;
Figures 4a-4c show a side view, perspective view and a transparent perspective view of a first embodiment of connection means according to the present invention respectively;
Figures 5a-5b show a perspective view and an end view of an annular element with the connection means shown in figures 4a-4c being connected in position in use;
Figures 6a-6b show a side view and a transparent perspective view of a second embodiment of connection means according to the present invention respectively;
Figures 7a-7b show a side view and a perspective view of a third embodiment of connection means according to the present invention respectively; and
Figures 8a-8b show a perspective view and an end view of a connection pin according to an embodiment of the present invention.

Referring to the figures, there is illustrated an annular element 2 forming part of a cable protection system according to an embodiment of the present invention. The annular element 2 comprises a first shell half 4 and a second shell half 6. The shell halves 4, 6 are identical in this embodiment and are non-over-centre castings (in that there are no portions protruding outwardly from the centre line 'C' or radial surface 8-that is, there are no portions protruding from one shell half 4 towards the other shell half 6 or no overlapping portions on the shell half castings).

Each shell half 4, 6 comprises a body portion 10 located at a first end 14, and a neck portion 12 protruding outwardly from an end of body portion 10 and located at a second end 16. Body portion 10 has a larger outer diameter than neck portion 12. In addition, neck portion 12 has a smaller outer diameter immediately adjacent the body portion compared to the outer diameter adjacent second end 16, thereby forming an annular channel 18 on the exterior of the neck portion 12 immediately adjacent the body portion 10. This allows for secure connection of adjacent annular elements together in use, as will be described in more detail below.

An axial cavity 20 is defined in the interior of each shell half 4, 6. The axial cavity portion 20' of the body portion 10 has a larger interior diameter than the axial cavity portion 20" of the neck portion 12. The axial cavity portions 20' and 20" of the body portion and neck portion are open to each other or in fluid communication with each other.

In use, the radial surfaces 8 of each shell half 4, 6 are brought together into abutting relationship to form the annular element 2 and are connected together via connection means 22 provided on opposite sides of the exterior of the annular element 2. In particular, the body portion 10 of each shell half 4, 6 has connection recesses 24 defined on an external surface for the location of part of a connection means 22 in use. The connection means will be explained in more detail below.

With the annular element 2 in a closed position, an opening 26 is defined in first end 14 and a second opening 28 is defined at second end 16. This allows for a cable or umbilical to pass through the annular element in use.

The present invention provides a strong, simple and cost-effective design that is quick to install.

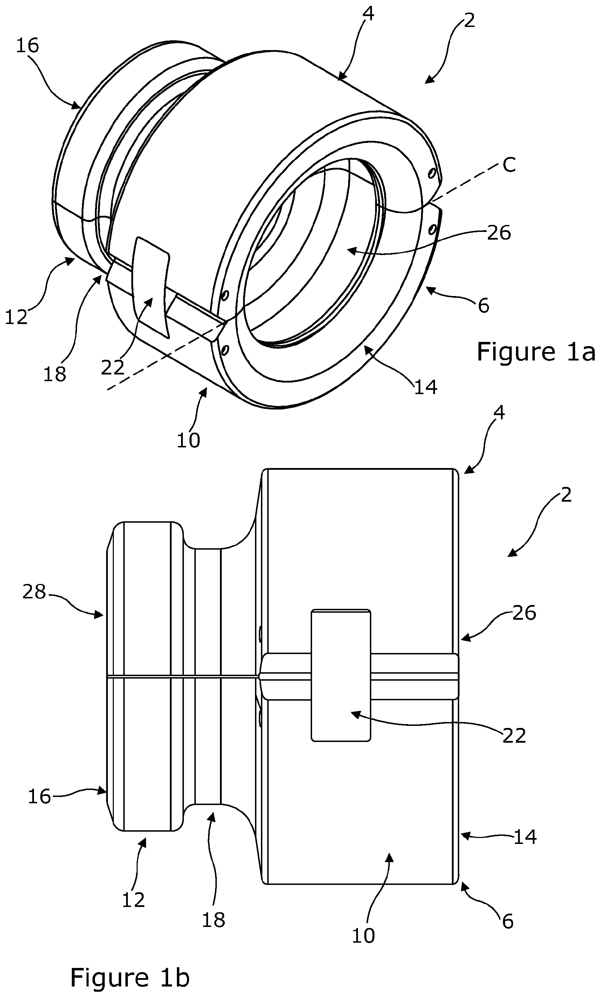

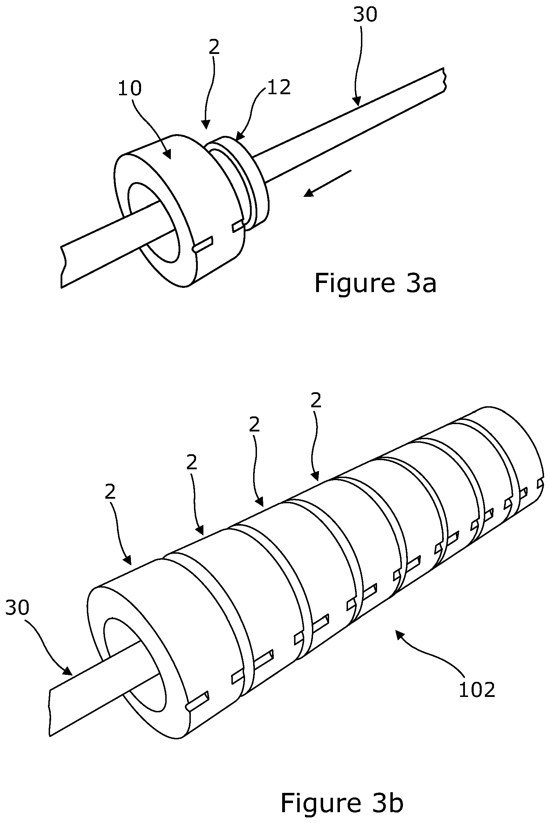

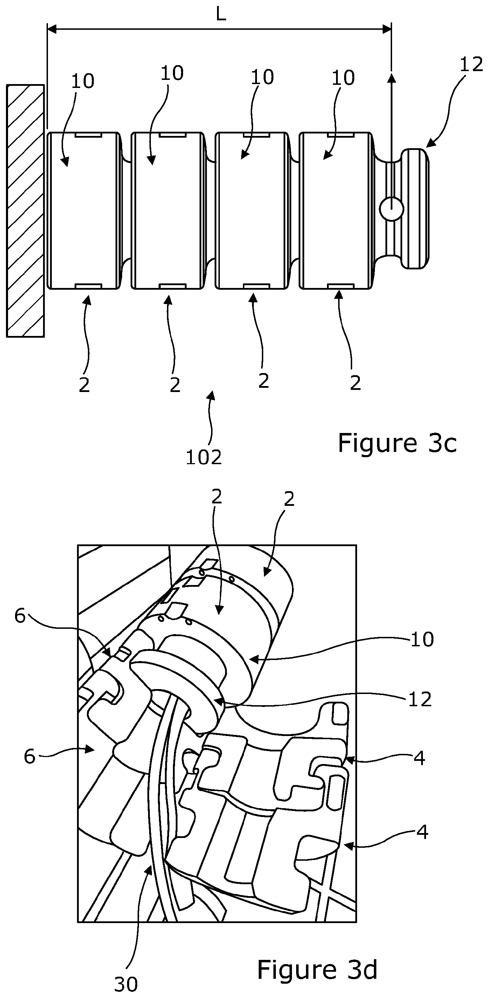

The first and second shell halves 4, 6 are movable relative to each other between an open position, as shown in figure 3d, to a closed position, as shown in figures 1a-1b. In the closed position, the radial surfaces 8 of the first and second shell halves 4, 6 are brought into abutting engagement with each other so that they are directly opposite each other. In the closed position, access to the interior cavity and any cable or umbilical located therein is restricted or prevented. In the open position, the radial surface of the first and second shell halves 4, 6 are moved away from each other. In this open position, access to the interior cavity can be gained to allow a cable or umbilical to be located in and/or removed therefrom.

With the annular element 2 in a closed position, the opening 26 at first end 14 of the shells 4, 6 opens into the axial cavity portion 20' and the opening 28 at second end 16 of the shells 4, 6 opens into the axial cavity portion 20". Partial openings 26 and 28 are defined in each of the shell half members.

The first and second shelf halves 4, 6 can be moved around a cable 30 in use, such that part of the cable 30 passes through the axial cavity of the annular element 2. More particularly, the cable 30 passes through the axial cavities 20', 20" of both the body portion 10 and the neck portion 12. The shell halves 4, 6 are closed and are connected together via the connection means 22 with the cable 30 located through the axial cavity 20. A plurality of annular elements 2 can be connected together in an end to end manner, as shown in figures 3b-3c, to form an elongate cable protection system.

In order to engage adjacent annular elements together, the larger cavity portion 20' of the body portion 10 of a first annular element 2 engages over and around the exterior surface of the neck portion 12 of a second adjacent annular element. End 14 of the body portion 10 of the first annular element 2 sits in the external channel 18 of the neck portion of the second adjacent annular element when the annular elements 2 are connected together. A plurality of annular elements 2 can be joined together in this way to form an elongate cable protection system 102 of the required length.

In general, the connection means 22 comprises a connection joint member that overlaps part of the external surfaces of both the first and second shell halves 4, 6 to connect the shell halves together in use. The connection joint member is a plate member comprising an exterior surface 32, an interior surface 34, side walls 36, 38 and first and second ends 40, 42. In the illustrated embodiments, the length of overlap of the connection joint member with the first and second shell halves is equal or substantially equal to provide an equal or substantially even distribution of the load between the shell halves. However, this does not need to be the case and the length of overlap of the connection joint member between the first and second shell halves can be different.

The exterior and interior surfaces 32, 34 of the connection joint member 22 are preferably curved. More particularly, the exterior surface 32 of the connection joint member 22 is in the form of a arc of a circle having the same or substantially the same curvature as the exterior surface of the body portion 10 of the first and second half shells 4, 6. The interior surface 34 of the connection joint member 22 is in the form of an arc of a circle having the same or substantially the same curvature as the interior base surface of the connection recess 24 with which the interior surface 34 of the connection joint member engages with in use.

The side walls 36, 38 of the connection joint member 22 are planar walls and are complementary or substantially complementary to the side walls of the connection recess 24. A through aperture 44 is defined in the connection joint member between side walls 36, 38 adjacent each of the first and second ends 40, 42. The through aperture 44 is for the location of a connection pin 46 therethrough in use to connect the connection joint member to each of the shell halves 4, 6 in use.

First and second through holes 48, 50 are also defined on opposing sides of the body portion of each of the first and second shell halves 4, 6. First through hole 48 passes from first end 14 of the shell halves 4, 6 into connection recess 24. Second through hole 50 passes from the connection recess 24 to the end of the body portion immediately adjacent the neck portion 12. With the connection joint member 22 located in the connection recess, such that the interior surface 34 engages with the interior surface of the connection recess, through apertures 48, 50 of the shell halves are aligned with the through aperture 44 of the connection joint member 22. This allows an elongate connection pin 46 to be located from an exterior of the annular element to pass through both through holes 48, 50 of the body portion 10 and the through aperture 44 of the connection joint member 22 to connect the connection joint member to the body portion 10 in use.

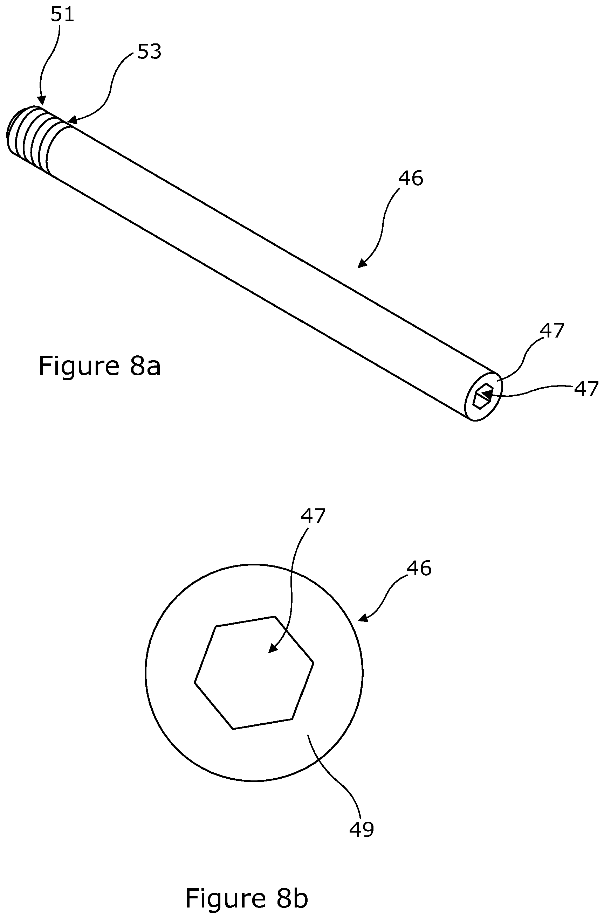

Figures 8a and 8b show a detailed view of a connection pin 46 according to an embodiment of the present invention. A hexagonal shaped recess 47 can be defined in an end 49 of the connection pin 46 to allow a suitable tool, such as an Allen Key, to be fitted to the same to tightened the connection pin in position with the shell halves and the connection joint member in use. The opposite end 51 of the connection pin 46 could be provided with a screw thread 53 on an external surface thereof to allow direct engagement with the walls defining the through apertures 48, 50.

Two connection pins 46 are required to securely connect each connection joint member 22 at the first and second ends 40, 42 to the first and second shell halves 4, 6. As such, four connection pins 46 are required in total to connect the opposing connection joint member 22 on each side of the shell halves.

The connection recess 24 is preferably complementary or substantially complementary in shape but with slightly larger dimensions to the connection joint member 22 that is to be located in the connection recess 24 in use. A snug fit is therefore typically created between the connection joint member and the connection recess.

In a preferred embodiment the external surface 32 of the connection joint member 22 is arranged to be flush or substantially flush with the external surface of the body portion 10 of the first and second shell halves. However, the external surface 32 could be recessed within the connection recess 24 if required. Alternatively, the external surface 32 could protrude outwardly from the connection recess but this is considered to be a less desirable arrangement.

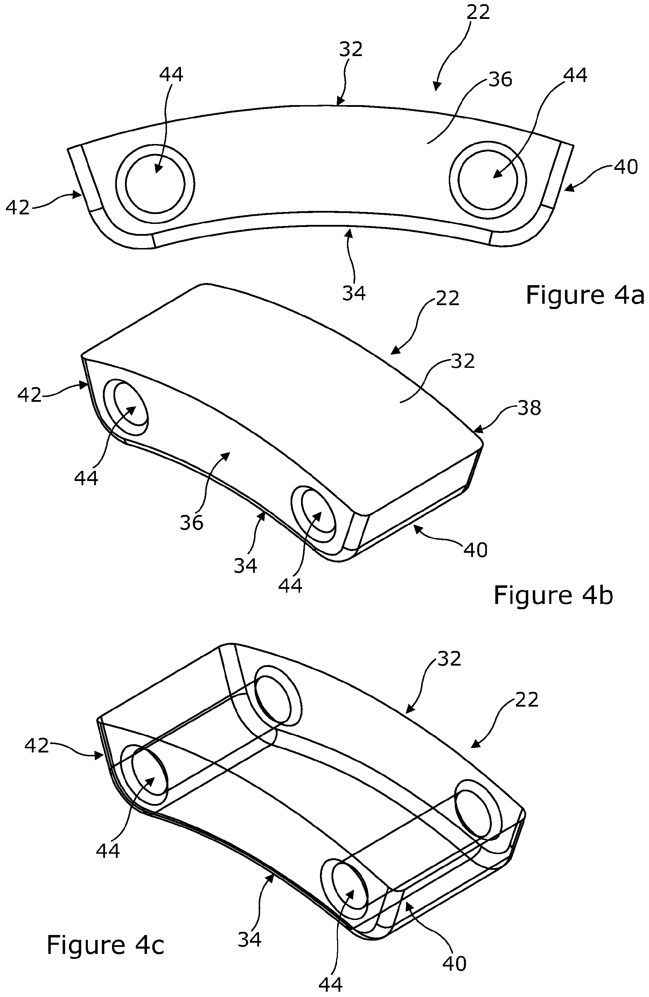

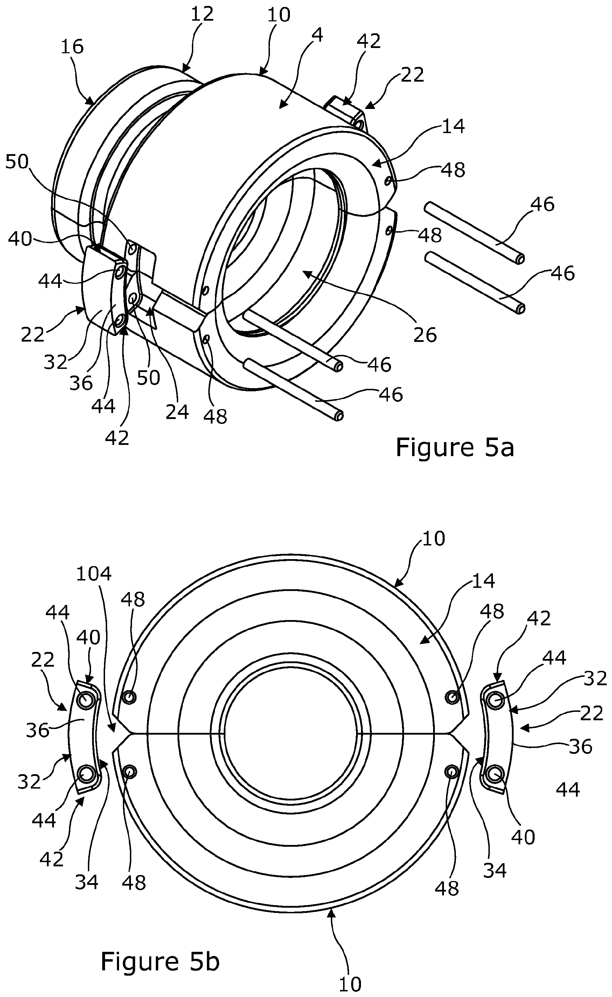

A first embodiment of the connection means 22 is shown in figures 4a-5b. In this embodiment, the first and second ends 40, 42 of the connection means 22 are angled or non-rounded, thereby allowing the ends to be fixedly mounted in the connection recess 24 at both ends when the connection pins 46 are located in position. The ends are preferably angled such that the connection means has a narrowing taper from the external surface 32, 34 to the internal surface of the same. Since both ends 40, 42 are the same shape, the ends of the connection means can be fitted in either orientation in the connection recess.

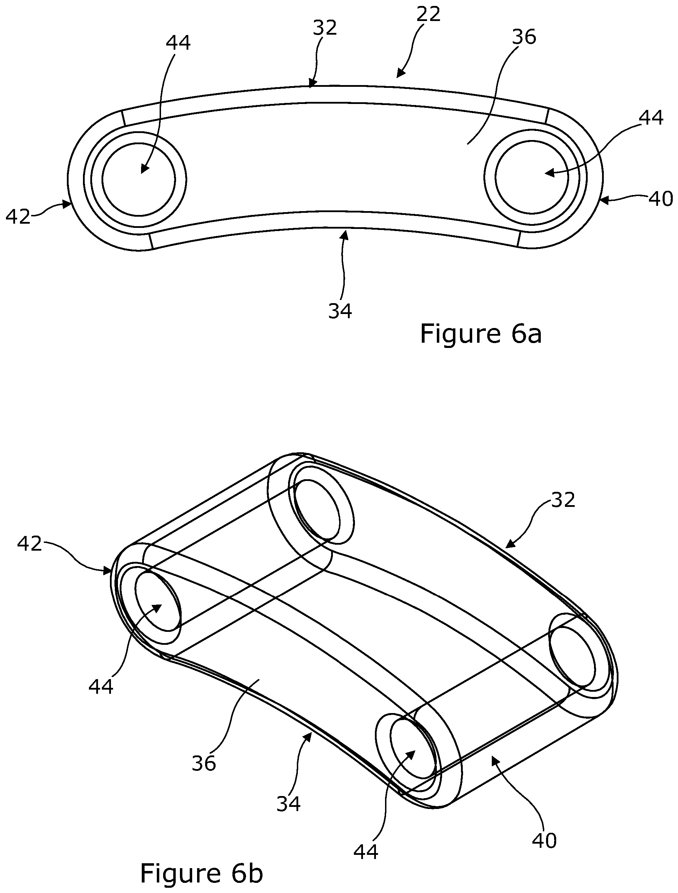

A second embodiment of the connection means 22 is shown in figures 6a-6b. In this embodiment, the first and second ends 40, 42 of the connection means are both rounded or curved, thereby allowing either end to be rotatably mounted to the first or second shell half 4, 6 if required. This arrangement allows the first and second shell halves to be hingedly mounted to each other so that the shell halves can be hingedly moved between the open and closed positions if required. In order to allow hinged movement of the shell halves, a cut out portion 104 can be defined in each of the shell halves adjacent the radial surfaces 8 to allow pivotal movement of the shell halves relative to each other without obstruction. Since both ends 40, 42 are the same shape, the ends of the connection means can be fitted in either orientation in the connection recess.

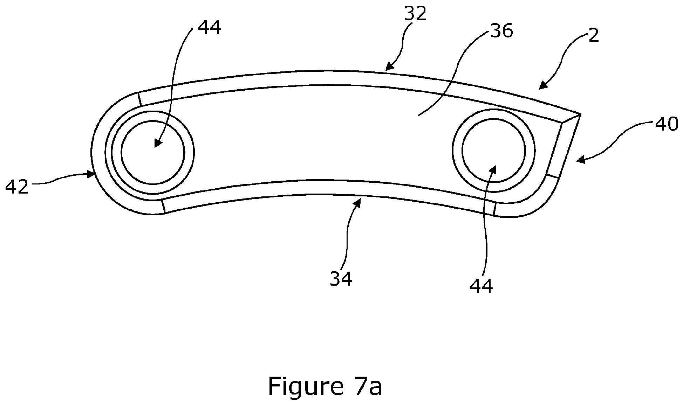

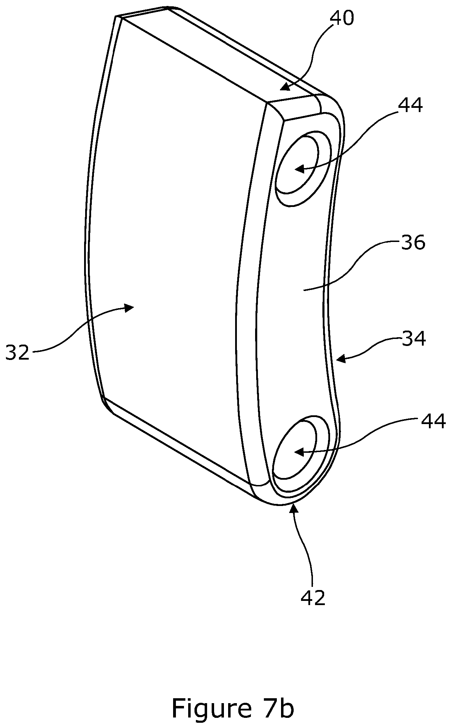

A third embodiment of the connection means is shown in figures 7a-7b. In this embodiment, the first end 40 of the connection means is non-curved or angled and the second end 42 is rounded or curved. This arrangement allows the second end 42 to be rotatably mounted to one of the shell halves 4, 6 and for the opposite end 40 to be fixedly mounted to the other of the shell halves. As the ends 40, 42 are of different shape, this may, in some examples but not necessarily all examples, require the connection means to be fitted in a required orientation in the connection recess. This arrangement allows hinged movement of the shell half with the rounded end fitted to the same.

Installation of the present invention can be completed in a number of different ways. For example, in the second and third embodiments shown in figure 6a-7b, three of the four connection pins can be pre-installed. This creates a hinge for the fully secured connection joint plate, meaning the annular element can be opened, installed around the cable or umbilical, closed and secured with a single connection pin installation in the field. With no potential for connection threads galling and only a single connection pin required to secure each annular element, installation time is significantly reduced compared to that of prior art designs.

In any of the above described embodiments of the connection means, one or more of the connection means can be pre-installed on a shell half for ease and transported to the location where they are to be fitted in use. This greatly simplifies the installation of the cable protection system in the field in use. The ability to allow the shell halves to be pivotably mounted relative to each other and/or to allow the connection means to be pivotably movable relative to a shell half to which it is connected to in use, also simplifies and improves the ease of installation of the cable protection system in the field in use.

The hinged embodiments allow the annular element to be lifted from the hinge point for simplified installation of heavier units.

The cable protection system of the present invention has been tested using a full finite element assessment using ANSYS simulation software. The full finite element assessment focused on a 1 metre segment of the system with design and test loads applied to the same. The 1 metre segment was assessed in bending and the simulation created all interface loads (such as for example, bending, compression, shear and/or the like) on the design to test bending moments. For example, the test procedure could be as follows:
1. Set up a 1-metre sample length of the system in a test rig with the annular elements arranged in a horizontal manner.
2. Measure the distance from the annular elements sample to a reaction point and calculate the load. Preferably the distance is 1m which ensures the optimum position for loading at a 1:1 load/length ratio.
3. Apply a working load limit (WLL) bending moment to the sample.
4. Measure the loaded minimum bend radius (MBR) of the sample.
5. Apply a test load to the sample (for example 1.5 x WLL).
6. Remove the load and inspect the product for signs of damage.
7. Rotate the sample through 90 degrees (i.e. so the annular elements are now arranged in a vertical manner) and repeat steps 2-6.
8. With the above steps completed, an additional destructive test can be completed on the sample in both planes.
9. The results are compared to design requirements and FEA output.

Preferably the testing is completed according to Industry Standards, such as API 17L1/17L2.

The tests showed the embodiments of the present invention all met the required load requirements for cable protection systems and had superior performance to both a conventional 6 bolt design and a conventional over-centre castellation design.

Although the cable protection system could be used in one example as bend restrictor apparatus, it will be appreciated that the cable protection system could also be used in other applications, such as for example, for cable crossing where a cable has to cross an obstacle in a subsea environment.

## Claims

1. A cable protection system, said cable protection system comprising one or more annular elements for location around at least part of an item in use; each annular element comprising a first shell member and at least a second shell member; the first and/or at least second shell member having a cavity defined therein, therethrough or therebetween for the location of said item part in use; said first and at least second shell members arranged to move between an open position, wherein said item part can be located in or removed from the cavity in use, and a closed position, wherein access to the cavity is restricted or prevented; and wherein connection means are provided for connecting the first and at least second shell members together in use; **characterised in that** the first and at least second shell members are non-over-centre or non-overlapping shell members, and the connection means are arranged to connect the first and/or at least second shell members in a circumferential direction in use.

2. The cable protection system according to claim 1, wherein one or more radial surfaces of the first and at least second shell members are brought into abutting relationship to provide the closed position in use.

3. The cable protection system according to any preceding claim, wherein each of the first and at least second members and/or the annular element includes a body portion, and a neck portion protruding outwardly from the body portion; and wherein the body portions of the first and at least second shell members are arranged for engagement around the neck portions of adjacent first and at least second shell members and/or an adjacent annular element in use.

4. The cable protection system according to claim 3, wherein a first end of the neck portion immediately adjoining the body portion has a smaller external diameter than a second end of the neck portion furthest from the body portion.

5. The cable protection system according to any preceding claim, wherein an outer or external surface of the connection means has a curvature or surface shape that is the same or substantially the same as a curvature or surface shape of the external surface of the annular element, at least at the location where the connection means is connected to the annular element in use.

6. The cable protection system according to any preceding claim, wherein an outer or external surface of the connection means is arranged to be flush or substantially flush, recessed or substantially recessed, protruding outwardly with respect to the surrounding external surface of the annular element, the first shell member and/or the at least second shell member when it is connected to the shell members and/or annular element in use.

7. The cable protection system according to any preceding claim, wherein one or more connection recesses are defined in an external surface of the first and/or at least second shell members for location of at least part of the connection means in use.

8. The cable protection system according to any preceding claim, wherein the connection means, or at least part of the connection means, is fixedly, rotatably, hingedly or pivotably mounted or mountable to the first and/or at least second shell members in use.

9. The cable protection system according to any preceding claim, wherein the connection means has a first end and a second end, the first end arranged for connection to one of the first and/or at least second shell member, and the second end arranged for connection to the other of the first and at least second shell members; and wherein a) either or both of the first and second ends of the connection means are capable of being pivotably, hingedly or rotatably mounted to the first and/or at least second shell member; b) one end of the connection means is capable of being pivotably, hingedly or rotably mounted to one of the first and/or at least second shell member, and the other end of the connection means is fixedly mounted to the first and/or at least second shell member; or c) both ends of the connection means are arranged to be fixedly mounted or mountable to the first and/or at least second shell member in use.

10. The cable protection system according to claims 8 or 9, wherein the first and/or second end of the connection means that is rotatably, hingedly or pivotably mounted to the first and/or second shell members is rounded, substantially rounded, curved or convexed; and/or wherein the first and/or second end of the connection means that is fixedly mounted to the first and/or second shell members is at any or any combination of an angle, flat, planar, non-rounded, angular or non-curved.

11. The cable protection system according to any preceding claim, wherein the connection means includes or is associated in use with one or more connection protrusions or connection pins for allowing connection of the connection means to the first and/or at least second shell members in use; and/or wherein an aperture, recess, channel or through-hole is defined at an end or each end of the connection means and/or a connection recess for the location of a connection pin or connection protrusion therein or therethrough in use.

12. The cable protection system according to claim 11, wherein the one or more connection protrusions or connection pins is arranged axially with respect to the first and/or second shell members; or a longitudinal axis of the one or more connection protrusions or connection pins is arranged to be parallel or substantially parallel to a longitudinal axis of the first and/or second shell members when fitted in use.

13. The cable protection system according to any preceding claim, wherein a first end of the body portion of the first and/or at least second shell member has an aperture, channel or through-hole defined therethrough to a second end of the body portion of the shell member for the location of a connection pin or connection protrusion therein or therethrough in use.

14. The cable protection system according to any preceding claim, wherein a cut out portion is defined on an external surface adjacent a jointed interface of the first and/or at least second members to allow the shell members to be pivotably, hingedly or rotatable movable relative to each other without obstruction in use.

15. A method of using a cable protection system, said method including the steps of: locating a first shell member and at least a second shell member around at least part of an item to form one or more annular elements, locating said item part within a cavity defined in said first and/or said at least second shell members; moving said first and at least second shell members between an open position, wherein said item part can be located in or removed from the cavity in use, and a closed position, wherein access to the cavity is restricted or prevented; and connecting the first and at least second shell members together using connection means; **characterised in that** the first and at least second shell members are non-over-centre or non-overlapping shell members, and the method includes the step of connecting the connection means to the first and/or at least second shell members in a circumferential direction.
